# EUROPEAN PATENT APPLICATION

(11) **EP 4 810 193 A2**
(43) Date of publication of application: **23.09.2026**
(21) Application number: 26187603.1
(22) Date of filing: 08.09.2023
(51) Int. Cl.: B23P 19/06

(54) **JOINING METHOD AND JOINING DEVICE FOR JOINING WORKPIECES**

(62) Document number(s) of the earlier application(s) in accordance with Art. 76 EPC: 23196218.4 / 4 520 453
(71) Applicant: Newfrey LLC, New Britain, CT 06053 (US)
(72) Inventor: BLOECHER, Michael, 35394 Giessen (DE); HOFMANN, Alexander, 35394 Giessen (DE)
(74) Representative: Witte, Weller & Partner Patentanwälte mbB

(57) **Abstract**

Joining method for joining at least two workpieces with a joining device and joining device having:
- a retaining device (14) for a joining element and by means of which the joining element can be guided along or arranged on a joining axis,
- a clamping device (22) with which one or more workpieces can be compressed in a joining direction, and
- a thermal device (28),
wherein the thermal device is arranged on the clamping device and moves together with the clamping device.

## Description

The present disclosure relates to a joining device, in particular a joining device adapted to join a workpiece arrangement (for instance at least two sheet or workpieces arranged one above the other) with a joining element and without pre-formed (for example pre-drilled or pre-punched) hole or holes in the component prior to the joining comprising a clamping device. The present invention also relates to a process for joining a workpiece arrangement.

Joining methods and joining devices of the above-mentioned kind are widely known, especially in the field of clinching, resistance welding, punch riveting or direct screwing, etc., and are used for example in automotive engineering.

It is known to use during a mechanical joining process a joining device with a punch with which a linear setting movement can be executed and a clamping device. The clamping device ensures different functions such as pressing together the members of a workpiece arrangement to avoid any gap between the workpieces, avoiding a possible displacement of adhesive between the workpieces, reducing the workpiece deformation during the joining process.

The joining devices known usually comprises a clamping device attached to a setting punch via a spring and moved with it. Document DE 10 2005 031 917 A1 discloses a method for joining in which, in a first step, a main piston and a clamping device are pressed against the workpieces with a comparatively low force, so that the workpieces are held immovably in contact with one another and with a die.

In joining technology processes, it can be advantageous if the workpieces to be joined are partially heated before the setting process. Thermal devices such as plasma torches are often used for this heating. EP3515632A1 from the applicant discloses for instance such process. The thermal device is usually permanently mounted to the housing of the joining device.

When positioning the thermal device, a defined distance between the thermal device and the component must be maintained. If the distance is not maintained, several problems can occur. For example fluctuations in energy transfer to the workpiece lead to joining area too cold or too hot, which compromises the quality of the joining. Besides, since the thermal device such as a plasma torch or plasma burner usually has to be mounted at an angle with regard to the surface of the workpiece, due to space requirements, the workpiece may be heated outside the joining area. Finally, due to component variations or robot positioning errors, the position of the thermal device relative to the workpiece may not be constant. Small changes in the workpiece position (distance of the thermal device) lead to position shifts of the heated zone. The joining element may not be placed in the heated zone.

Further joining devices are known from documents DE 10 2021 121086 A1, CN 104 607 557 A, DE 10 2019 108813 A1, DE 10 2018 202140 A1, US 2021/283712 A1, US 2009/188101 A1, and JP 2007 203307 A.

It would therefore be advantageous to improve the existing joining device and joining method to avoid these drawbacks.

An object of the present invention is therefore to provide a joining device which is flexible, compact and a joining method by means of which the joining process can be better controlled and hence performed more effectively.

Accordingly, the present invention provides a joining device according to claim 1 and a joining method according to claim 7.

More particularly, the joining device for joining workpieces comprises a joining head which has:
- a retaining device for a joining element and by means of which the joining element can be guided along or arranged on a joining axis,
- a clamping device with which one or more workpieces can be compressed in a joining direction, and
- a thermal device,
wherein the thermal device is arranged on the clamping device and moves together with the clamping device.

Mounting the thermal device on the clamping device allows the distance between the thermal device and the workpiece to be changed during the joining process. Thus, this increase the flexibility of the joining device, since adjustment can be made to the position of the thermal device relative to the workpiece.

**In** an embodiment, the thermal device is a plasma torch.

In an embodiment, the thermal device is movably arranged on the clamping device. When heating the components, it can be advantageous to press the workpieces to be joined together during heating (heat conduction from the upper layer to the lower layer of the workpiece arrangement) or not to press them together (the upper workpiece is then heated more).

In an embodiment, the thermal device is movable on the clamping device between a first position, in which the clamping device is adapted to contact the workpiece and the thermal device extends at a first pre-determined position from said workpiece and a second position, in which the clamping device is adapted to be at a non-zero distance from the workpiece and the thermal device extends at a second pre-determined position from said workpiece. Thus, the distance between the thermal device and the workpiece arrangement may or may not remains the same when the clamping element contacts the workpiece or not. In another embodiment, the thermal device is fixedly arranged on the clamping device.

According to the claimed invention, the thermal device is controlled and driven by a dedicated thermal drive unit. The thermal device may thus be independently controlled on the clamping device.

In an embodiment, the clamping device is spring loaded. In other embodiments, the clamping device may also be electrically or pneumatically or hydraulically driven.

In an embodiment, the clamping device is controlled and moved by a dedicated clamping drive unit. The clamping device can be controlled on force or displacement, and in addition with possible with time-delay. The clamping device can apply, during the setting steps of the joining element different clamping forces to or displacement with regard to the workpieces.

According to the claimed invention, the clamping drive unit comprises a displacement measurement system, for example a displacement encoder adapted to determine the distance between a workpiece and the thermal device. Thus, the clamping device is used to find and record the position of the workpiece.

The present disclosure is also directed to a joining method for joining at least two workpieces with a joining device comprising the following steps of:
- providing a workpiece arrangement comprising an upper workpiece and a lower workpiece,
- providing a joining device according any of the preceding claims, the joining device being arranged at a non-zero distance above the workpiece arrangement;
- using the thermal device to heat the workpiece arrangement, wherein the thermal device may be used in two different positions of the clamping device;
- setting a joining element within the workpiece arrangement by the joining element into the workpiece arrangement.

When heating the components, it can be advantageous to press the workpieces to be joined together during heating (heat conduction from the upper layer to the lower layer of the workpiece arrangement) or not to press them together (the upper workpiece is then heated more).

In an embodiment, a heating step is undertaken when the clamping device is at a non-zero distance from the workpiece arrangement. It allows to heat more the upper workpiece of the workpiece arrangement facing the joining device.

In an embodiment, a heating step is undertaken when the clamping device contacts the workpiece. This allows to optimize the heat transfer between a first and a second workpiece.

In an embodiment, the thermal device is arranged movable on the clamping device between a first and a second position. In the first position the clamping device contacts the workpiece, and the thermal device extends at a first pre-determined position from said workpiece. In the second position, the clamping device is at a non-zero distance from the workpiece and the thermal device extends at a second pre-determined position from said workpiece. The first and second pre-determined position may be similar or different, depending on the results to be achieved during the heat treatment.

According to the claimed invention, a displacement measurement system, for example a displacement encoder determines the distance between the thermal device and the workpiece arrangement. The displacement encoder may be provided on or in the clamping drive unit.

In an embodiment, the clamping device is moved down up to the workpiece arrangement and until it contacts the workpiece arrangement, a contact position corresponding to the position in which the clamping device contacts the workpiece arrangement is saved by a control unit in order to be used for further setting steps.

According to the claimed invention, the distance between the thermal device and the workpiece arrangement may be determined and corrected before and during the setting steps. Thus, a control may occur to ensure a correct heating of the workpiece thorough the process.

The invention and its advantages will be better understood from the reading of the following description, given by way of example only and with reference to the accompanying drawings, of which:
Fig. 1 schematically shows a joining device according to the invention with a retaining device comprising a joining element, a clamping device and a thermal device, wherein the clamping device clamps a workpiece arrangement, and the thermal device is in a first position;
Fig. 2 schematically shows the joining device of Fig. 1, wherein the clamping device is at distance from the workpiece arrangement and the thermal device is in a second position.

The embodiments of the disclosure will be best understood by reference to the drawings, wherein the same reference signs designate identical or similar elements. It will be readily understood that the components of the disclosed embodiments, as generally described and illustrated in the figures herein, could be arranged and designed in a wide variety of different configurations. Thus, the following detailed description of the embodiments of the systems and methods of the disclosure is not intended to limit the scope of the disclosure, as claimed, but is merely representative of possible embodiments of the disclosure.

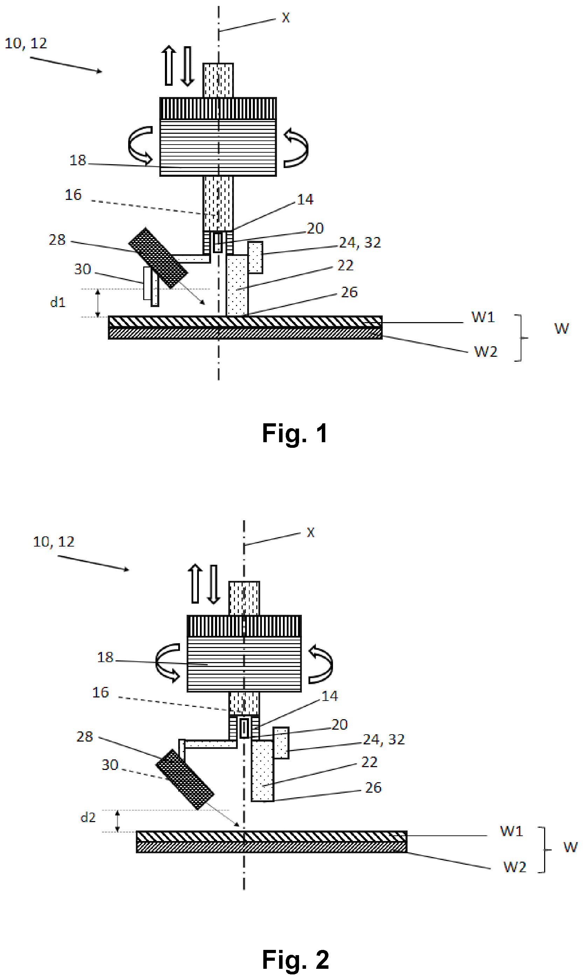

Fig. 1 and Fig. 2 show schematically a joining device 10. The joining device 10 is adapted to carry out a method for joining a workpiece arrangement W comprising at least a first and a second workpiece W1, W2 (or sheet) arranged one above the other, together with a joining element. The joining device comprises a joining head 12, which can be moved freely in the space by means of a robot (not represented). Said joining head 12 being for instance mounted on one arm of the robot. The joining device 10 or joining head 12 comprises a retaining device 14. The retaining device 14 is adapted to retain and guide or arranged a joining element along a joining axis for its setting into the workpiece arrangement W. The joining element may be a punch rivet, a self-piercing rivet or a pin or a screw.

The joining device 10 may comprise a punch 16 for with which a linear setting movement of the joining element can be executed, the punch 16 being movable along the joining axis by a drive unit 18. The retaining device 14, the punch 16 and the drive unit 18 may be arranged longitudinally extending along a joining axis X. The punch 16 may be adapted to penetrate the retaining device 14 in order to drive the joining element 20 toward and into the workpiece arrangement W. The punch 16 allows a linear setting movement of the joining element 20. The punch 16 is movable along the joining axis X, notably by the drive unit 18.

The joining device 10 further comprises a clamping device 22 adapted to compress or press the workpiece arrangement in the joining direction.. The clamping device 22 may be movable and controlled by the drive unit 18. For instance, the clamping device 22 may be sping-loaded. The clamping device 22 may also be moved or controlled by a dedicated clamping drive unit 24, different from the drive unit 18.

The clamping device 22 may comprise a surface detection unit 26 adapted to detect an upper surface of the workpiece arrangement W. The surface detection unit 26 may comprise a laser adapted to measure without contact the distance from the workpiece, or a capacitive sensor or an inductive sensor or any other contactless proximity sensor. Alternatively, the surface detection unit 26 may comprise a device for a mechanical or touch measurement for tactile surface recognition. For example, a force increase or a relative displacement between the punch and the retaining device may be used for contact detection.

The joining device 10 comprises a thermal device 28. The thermal device 28 is arranged on the clamping device 22. More particularly, the clamping device 22 may comprise a recess or a portion adapted to receive or connect the thermal device 28 directly to the clamping device 22. The thermal device 28 is for instance a plasma torch. The plasma torch will thermally assist the joining process. Patent publication EP3515632A1 from the applicant explains for instance how the plasma torch may assist the joining process.

The thermal device 28 may be fixedly fixed to the clamping device 22 or may be movable fixed to the clamping device 22.

Fig. 1 shows the clamping device 22 in contact with the workpiece arrangement W and the thermal device 28 in a first position with regard to the clamping device.

Fig. 2 shows the clamping device 22 at a non-zero distance from the workpiece arrangement W and the thermal device 28 in a second position with regard to the clamping device 22.

The thermal device 28 may be controlled and driven with regard to the clamping device by a dedicated thermal drive unit 30. The thermal drive unit 30 moves the thermal device from its first position to its second position and vice-versa. A controller may control the position of the thermal device 28, depending either on the position of the clamping device or on pre-determined joining method parameters.

The clamping device 22, and more particularly the drive unit 18, 24 controlling the clamping device 22 (either the drive unit 18 or the clamping drive unit 24) may comprise a displacement measurement system 32, for example a displacement encoder adapted to determine the distance between a workpiece and the clamping device 22. Thus, indirectly, the distance between the thermal device 28 and the workpiece arrangement W may also be controlled and modified if necessary.

The joining device 10 may be used, as mentioned above, to join workpieces of a workpiece arrangement, according to the following steps.

In a first step, the joining device 10 is arranged (for instance by the robot mentioned above) above the workpiece arrangement W. The joining device 10 does not contact the workpiece arrangement W. The joining device comprises a joining element. The workpiece arrangement comprises at least two workpieces (or sheets) W1, W2 arranged one above the other. Optionally, an adhesive is provided between the two workpieces.

In a second step, the clamping device 22 and the thermal device 28 are moved toward the workpiece arrangement W until the clamping device contacts the upper surface of the workpiece arrangement W. The thermal device 28 is then turned on to heat up the workpiece arrangement W.

In a third step, the joining element 20 can be set into the workpiece arrangement W, for instance by the punch 16. The joining element 20 is pressed through the at least two workpieces W1, W2 with a determined setting force.

In a last step, the clamping device 22 is moved back to an exit position. Thus, the next joining element may be used for the next setting process.

The joining device 10 as described above allows the introduction of a "workpiece finding" stroke. During this stroke, the clamping device 22 is moved until it contacts the upper surface of the workpiece arrangement. The detection of the upper surface of the workpiece arrangement may be done with a mechanical contact measurement. A contact sensor can be used. Alternatively, a force increase or a relative displacement between the punch and the retaining device may be used for contact detection. The position of the upper surface of the workpiece arrangement can then be stored and be used in the subsequent steps such as the joining element setting step or heating step to better control and determine the joining parameters.

As mentioned above, the thermal device 28 may be movable on the clamping device 22 between two different positions.

For instance, in the first position (visible in Fig. 1) the clamping device contacts the workpiece arrangement W (and press the workpiece arrangement) and the thermal device 28 heats the workpiece arrangement. The thermal device is arranged at a first pre-determined distance d1 from the workpiece arrangement. The heat transfer from the upper workpiece to the lower workpiece is increased by the clamping. When the clamping device contacts the workpiece, the position of the thermal device with regard to the workpiece may be determined via the clamping device.

In the second position (depicted in Fig. 2), the clamping device does not contact the workpiece arrangement. The thermal device is arranged at a second pre-determined distance d2 from the workpiece arrangement. The second pre-determined distance may be the same than the first pre-determined distance d1, due to the different position of the thermal device on the clamping device. The heat transfer between the upper workpiece and the lower workpiece is reduced, since the workpieces are not pressed by the clamping device 22. When the thermal device 28 is mounted in the second position, after an optional "workpiece finding" stroke as depicted above, the clamping device may be retracted by a pre-determined distance corresponding to the optimal distance for the thermal device 28 for heating the workpieces. The distance d2 between the thermal device 28 and the upper surface of the workpiece arrangement W may be determined via the displacement encoder 32 of the drive unit or clamping drive unit.

The following Clauses define embodiments of the present disclosure:
Clause 1. Joining device (10) for joining workpieces comprising a joining head having:
   - a retaining device for a joining element and by means of which the joining element can be guided along or arranged on a joining axis,
   - a clamping device (22) with which one or more workpieces can be compressed in a joining direction, and
   - a thermal device (28),
   wherein the thermal device (28) is arranged on the clamping device (22) and moves together with the clamping device (22).
Clause 2. Joining device (10) according to Clause 1, wherein the thermal device (28) is a plasma torch.
Clause 3. Joining device (10) according to Clause 1 or 2, wherein the thermal device (28) is movably arranged on the clamping device (22).
Clause 4. Joining device (10) according to Clause 1 or 2, wherein the thermal device is fixedly arranged on the clamping device.
Clause 5. Joining device (10) according to Clause 3, wherein the thermal device (28) is movable on the clamping device (22) between a first position, in which the clamping device is adapted to contact the workpiece and the thermal device extends at a first pre-determined position from said workpiece and a second position, in which the clamping device is adapted to be at a non-zero distance from the workpiece and the thermal device extends at a second pre-determined position from said workpiece.
Clause 6. Joining device (10) according to any of Clauses 1 to 5, wherein the clamping device (22) is spring loaded or electrically or pneumatically or hydraulically controlled.
Clause 7. Joining device (10) according to any of Clauses 1 to 5, wherein the clamping device (22) is controlled and moved by a dedicated clamping drive unit.
Clause 8. Joining device (10) according to Clause 7, wherein the clamping drive unit comprises a displacement measurement system adapted to determine the distance between a workpiece and the thermal device (28).
Clause 9. Joining method for joining at least two workpieces with a joining device (22) comprising the following steps of:
   - providing a workpiece arrangement (W) comprising an upper workpiece and a lower workpiece,
   - providing a joining device (10) according any of the preceding Clauses, the joining device being arranged at a non-zero distance above the workpiece arrangement;
   - using the thermal device (28) to heat the workpiece arrangement;
   - setting a joining element (20) within the workpiece arrangement by the joining element into the workpiece arrangement.
Clause 10. Joining method according to Clause 9, wherein a heating step is undertaken when the clamping device (22) is at a non-zero distance from the workpiece arrangement.
Clause 11. Joining method according to Clause 9 or 10, wherein a heating step is undertaken when the clamping device (22) contacts the workpiece.
Clause 12. Joining method according to any of Clauses 9 to 11, wherein the thermal device (28) is arranged movable on the clamping device (22) between a first and a second position, and wherein in the first position the clamping device contacts the workpiece and the thermal device extends at a first pre-determined position from said workpiece and in the second position, the clamping device is at a non-zero distance from the workpiece and the thermal device extends at a second pre-determined position from said workpiece.
Clause 13. Joining method according to any of Clauses 9 to 12, wherein a displacement measurement device (32) determines the distance between the thermal device (28) and the workpiece arrangement (W).
Clause 14. Joining method according to any of Clauses 9 to 13, wherein the clamping device (22) is moved down up to the workpiece arrangement and until it contacts the workpiece arrangement, a contact position corresponding to the position in which the clamping device contacts the workpiece arrangement is saved by a control unit in order to be used for further setting steps.
Clause 15. Joining method according to any of Clauses 9 to 14, wherein the distance between the thermal device and the workpiece arrangement may be determined and corrected before and during the setting steps.

### Reference numerals:

joining device 10
workpiece arrangement W
a first and a second workpiece W1, W2
joining head 12
retaining device 14
punch 16
drive unit 18
joining axis X
joining element 20
clamping device 22
clamping drive unit 24
surface detection unit 26
thermal device 28
thermal drive unit 30
displacement measurement system 32

## Claims

1. Joining device (10) for joining workpieces comprising a joining head having:
- a retaining device for a joining element and by means of which the joining element can be guided along or arranged on a joining axis,
- a clamping device (22) with which one or more workpieces can be compressed in a joining direction, and
- a thermal device (28),
- wherein the thermal device (28) is arranged on the clamping device (22) and moves together with the clamping device (22),
- wherein the clamping device (22) is controlled and moved by a dedicated clamping drive unit, and
- wherein the clamping drive unit comprises a displacement measurement system adapted to determine the distance between a workpiece and the thermal device (28), so that the distance between the thermal device and the workpiece arrangement may be determined and corrected before and during the setting steps.

2. Joining device (10) according to claim 1, wherein the thermal device (28) is a plasma torch.

3. Joining device (10) according to claim 1 or 2, wherein the thermal device (28) is movably arranged on the clamping device (22).

4. Joining device (10) according to claim 1 or 2, wherein the thermal device is fixedly arranged on the clamping device.

5. Joining device (10) according to claim 3, wherein the thermal device (28) is movable on the clamping device (22) between a first position, in which the clamping device is adapted to contact the workpiece and the thermal device extends at a first pre-determined position from said workpiece and a second position, in which the clamping device is adapted to be at a non-zero distance from the workpiece and the thermal device extends at a second pre-determined position from said workpiece.

6. Joining device (10) according to any of claims 1 to 5, wherein the clamping device (22) is spring loaded or electrically or pneumatically or hydraulically controlled.

7. Joining method for joining at least two workpieces with a joining device (22) comprising the following steps of:
- providing a workpiece arrangement (W) comprising an upper workpiece and a lower workpiece,
- providing a joining device (10) according any of the preceding claims, the joining device being arranged at a non-zero distance above the workpiece arrangement;
- using the thermal device (28) to heat the workpiece arrangement;
- setting a joining element (20) within the workpiece arrangement by the joining element into the workpiece arrangement,
- wherein a displacement measurement device (32) determines the distance between the thermal device (28) and the workpiece arrangement (W), and
- wherein the distance between the thermal device and the workpiece arrangement is determined and corrected before and during the setting steps

8. Joining method according to claim 7, wherein a heating step is undertaken when the clamping device (22) is at a non-zero distance from the workpiece arrangement.

9. Joining method according to claim 7 or 8, wherein a heating step is undertaken when the clamping device (22) contacts the workpiece.

10. Joining method according to any of claims 7 to 9, wherein the thermal device (28) is arranged movable on the clamping device (22) between a first and a second position, and wherein in the first position the clamping device contacts the workpiece and the thermal device extends at a first pre-determined position from said workpiece and in the second position, the clamping device is at a non-zero distance from the workpiece and the thermal device extends at a second pre-determined position from said workpiece.

11. Joining method according to any of claims 7 to 10, wherein the clamping device (22) is moved down up to the workpiece arrangement and until it contacts the workpiece arrangement, a contact position corresponding to the position in which the clamping device contacts the workpiece arrangement is saved by a control unit in order to be used for further setting steps.
